# EUROPEAN PATENT APPLICATION

(11) **EP 0 798 942 A2**
(43) Date of publication of application: **01.10.1997**
(21) Application number: 97301069.7
(22) Date of filing: 19.02.1997
(51) Int. Cl.: H04Q 3/66, H04Q 3/00

(54) **Routing and bandwith allocation**

(30) Priority: 29.03.1996 GB 9606711
(71) Applicant: GPT LIMITED, Coventry, CV3 1HJ (GB)
(72) Inventor: Tetley, Richard Frederick, Nothall, Nottingham, NG16 1RH (GB); Elwell, John Robert, West Bridgford, Nottingham, NG2 6LT (GB); Easley, David Philip, Wollaton, Nottingham, NG8 1LD (GB); Pratt, Richard John, Chilwell, Nottingham. NG9 5BA (GB); Chappell, Richard Keith, Beeston, Nottingham, NG9 6EF (GB); Underwood, Graham Paul, West Bridgford, Nottingham,NG2 7HX (GB)
(74) Representative: Branfield, Henry Anthony

(57) **Abstract**

In a telecommunications system a method of routing calls and allocating circuits between a switching node and another switching node or between a switching node and a switching network, comprises the steps of:
a) allocating each circuit between a pair of nodes or between a node and a switching network to a specific Net Way which Net Way represents a collection of channels grouped together into a logical unit for the purpose of bandwidth management;
(b) creating a Traffic Type decode table at each node for deriving the traffic type of those incoming calls that, according to a signalling service, are not already attributed a traffic type;
(c) creating a Routing Choices table for associating each Net Way with specific destinations;
(d) creating a Routing Preferences table for associating each Routing Choice with a preference rating for each traffic type.
(e) creating a Route Restriction Groups table where each record defines a set of Route Restriction Class element values and specifies whether the set is 'allowed' or 'barred' according to that group.
(f) creating a Bandwidth Limits table where each record associates a Net Way with a particular traffic type and defines a reserved bandwidth level and a maximum bandwidth level for calls of that traffic type on that Net Way.
(g) allocating calls, with reference to their traffic type, to a Net Way determined by Routing Choice, Routing Preference, and on which a sufficient bandwidth exists.

## Description

The present invention relates to intelligent routing and bandwidth allocation mechanisms that take placed with a telecommunication system comprising a Network Service Manager (NSM) and NSM nodes.

According to the present invention there is provided a method of routing calls and allocating circuits in a telecommunications system between a switching node and another switching node or a switching network comprising the steps of :-
(a) allocating each circuit between a pair of nodes or between a node and a switching network to a specific Net Way which Net Way represents a collection of channels grouped together into a logical unit for the purpose of bandwidth management;
(b) creating a Traffic Type decode table at each node for deriving the traffic type of those incoming calls that, according to a signalling service, are not already attributed a traffic type;
(c) creating a Routing Choices table for associating each Net Way with specific destinations;
(d) creating a Routing Preferences table for associating each Routing Choice with a preference rating for each traffic type.
(e) creating a Route Restriction Groups table where each record defines a set of Route Restriction Class element values and specifies whether the set is 'allowed' or 'barred' according to that group.
(f) creating a Bandwidth Limits table where each record associates a Net Way with a particular traffic type and defines a reserved bandwidth level and a maximum bandwidth level for calls of that traffic type on that Net Way.
(g) allocating calls, with reference to their traffic type, to a Net Way determined by Routing Choice, Routing Preference, and on which a sufficient bandwidth exists.

The present invention will now be described by way of example, with reference to the accompanying drawings, in which:
Figure 1 shows a block diagram of a node/network service manager configuration;
Figure 2 shows a block diagram of a network including Net Ways;
Figure 3 shows a modified Figure 2 including a table illustrating the characteristics of the links;
Figure 4 shows a modified Figure 2 including a table of Routing Preferences;
Figure 5 shows an illustration of Route Restriction Groups;
Figure 6 shows a block diagram of basic call processing.

The present invention provides an intelligent software controlled interface between customer premises equipment and the public and private network domains by providing control at the node level. It is capable of dynamic bandwidth management and able to exploit current and future network services and tariff differentials. A typical installation will consist of a number of co-operating NSM nodes plus a centralised Network Services Manager. However, the nodes incorporate a substantial level of node management and are capable of operating without an NSM although the full advantages will not then be obtained.

The essence of the present invention is its ability to manage and route voice and data traffic over available public and private bandwidth in a cost effective and flexible manner. It will typically be interposed between a customer's site and the connected networks. On the site side it can be connected to one or more Private Automatic Branch Exchanges (PABXs) by 2Mbps links and to data devices, including Local Area Network (LAN) routers and Video Conferencing units, by a number of N * 64Kbps links. On the network side it is connected to one or more public and private networks by 2Mbps links. (In appropriate territories there will also be support for T1 1.5Mbps links, 64/56Kbps links, basic rate Integrated Services Digital Networks (ISDN) interfaces and X21/V.35 links).

A key feature of the nodes is the use of voice compression from 64Kbps bit rates to a nominal range of 8 to 32Kbps. This enables the use of each of the 64Kbps channels of the network 2Mbps links for multiple voice calls when they are destined for another site equipped with the present invention. Control of such calls is accomplished by in-band signalling between the nodes. The use of in-band signalling in this way gives the additional benefit of being able to provide private network features for voice calls even when the public network is used.

Another major feature is a form of bandwidth aggregation whereby a wideband data call or video call needing N * 64Kbps bandwidth can be divided into separate 64Kbps inter-node calls, each routed independently according to channel availability. These calls are then re-combined by the node at the destination site.

The system uses intelligent routing to make the inter-node calls by the most desirable route determined by the cost and service required. Similar algorithms are also used to obtain the most economical routings for conventional calls to destinations not equipped with the present invention.

The purpose of the NSM is to co-ordinate the nodes in a network, pre-allocating or reserving bandwidth for different types of traffic, and ensuring that the data upon which the nodes make their routing decisions is correct and up-to-date. It is also used to interrogate and configure individual elements of the network, both nodes and links, and to gather statistics for display, call-logging and call-billing purposes.

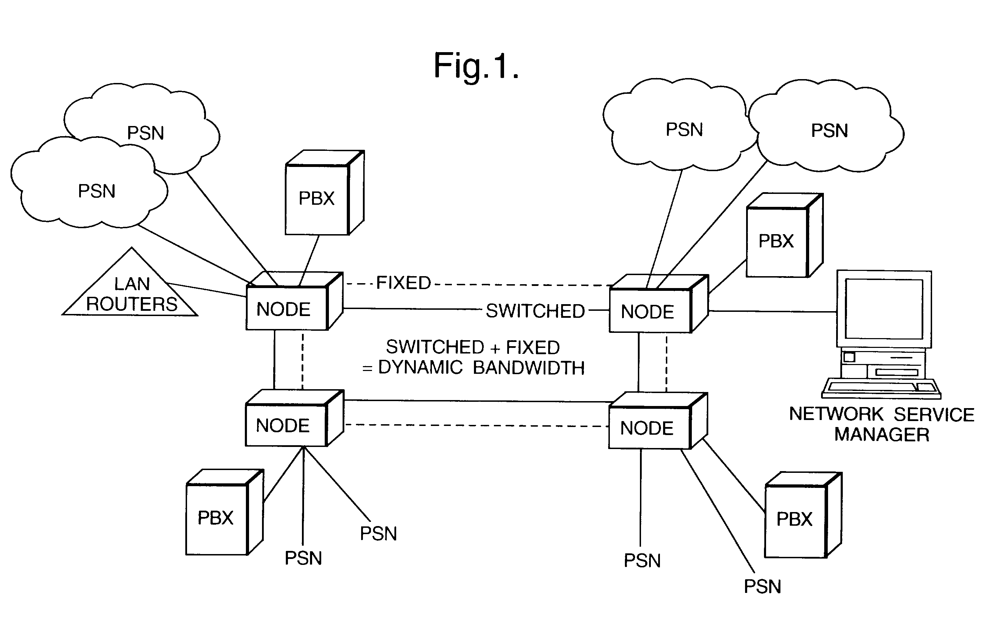

The interfaces on the system are shown schematically in Figure 1; the functionality, and in particular the mechanisms of specific relevance to the present invention are described in further detail below.

At some level, control must be exercised over every call. However, requiring a management evaluation of each call would create a prohibitive load on the management system and increase call set-up times significantly and this would not allow nodes to route calls autonomously. In addition, there is often very limited information available about each call, but all calls cannot be treated identically. For example, some calls may be allowed to break out onto a public network, while some may not and some calls may demand a high quality of service (e.g. the Managing Director's calls) while some may not. One solution is to group calls together, according to their characteristics and requirements, into a number of disjoint groups known as traffic types. So all of the normal voice calls might be grouped together as the traffic type "normal voice"; all of these calls would receive the same level of service. Important calls might be grouped together as "high priority voice", and given the best available service (with unrestricted public network access). Other traffic types might be created for FAX and modem traffic, LAN interconnection, video conferencing and voice mail. Each traffic type will have its own service profile, and traffic type can be added as new services are created. Details of how to decode incoming calls can be downloaded to the nodes so that autonomous bandwidth allocation decisions can be made locally at a node. Obviously this must be done consistently across the network.

Nodes can only derive traffic type from the information presented in a call set-up message. Management facilities are provided for defining meaningful traffic types in terms of signalling parameters, including class of service, originating line and called party identity, and the minimum required transfer capability.

The traffic type of a particular call is generally derived once at the first node the call passes through and then an indication of the traffic type is carried with the call by the Node Signalling Service (NSS). If a call breaks out of the private network and subsequently breaks back in, the traffic type may need to be re-derived.

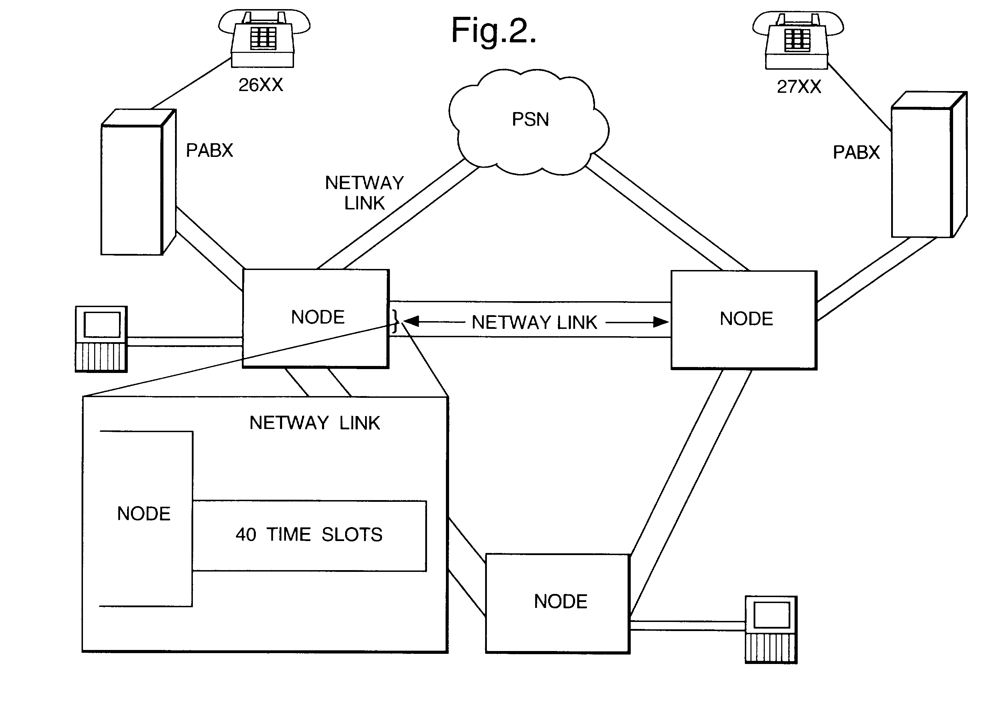

Traffic types can then be used as the basis for apportioning and sharing bandwidth on network links. Network circuits (i.e. circuits other than those connecting directly to customer premises equipment) are grouped together into 'Net Ways'. A Net Way is a collection of channels grouped together in a logical unit for the purpose of bandwidth management. A Net Way is a logical path between a node and (i) another node or (ii) a switching network (possibly via intermediate multiplexors in either case). (See Figure 2) There may be more than one Net Way running in parallel between the same two network elements.

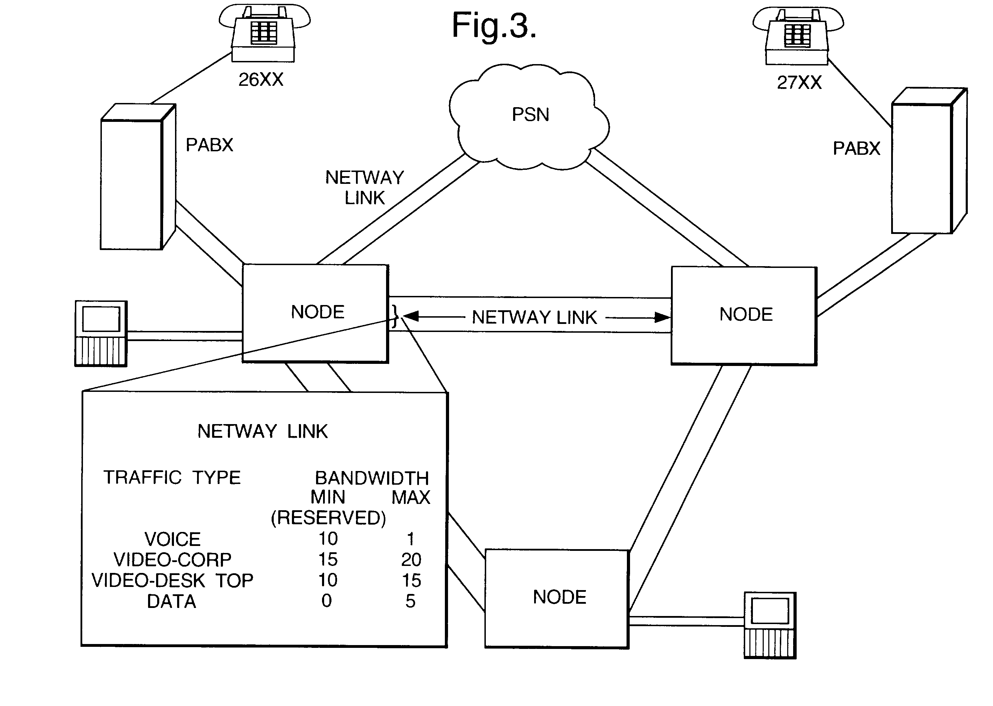

For each Net Way a table is configured which indicates which traffic types are permitted to use it and to what extent. Each permitted traffic type on the Net Way has specified a reserved amount and a maximum amount of bandwidth that can be used on that Net Way. As long as there is free bandwidth available on a given Net Way, a prospective outgoing call may use that Net Way if the current usage for the call's traffic type on the Net Way is below the reserve. Otherwise, the call may only use the Net Way if doing so will not infringe any other Traffic Type's reserved bandwidth nor its own maximum bandwidth. This 'bandwidth limits' scheme permits the partition of Net Ways into circuits reserved for particular traffic types and a number of circuits that can be shared between certain traffic types. The partitioning is dynamic because individual circuits are not tied to particular traffic types or to the shared pool. (See Figure 3).

Traffic types are also used for related aspects such as bandwidth monitoring. Traffic type is also a factor in routing in that it can affect the relative preference between the possible outgoing routes that can be chosen to reach the call's destination (see below).

A node routes calls according to the 'routing rules' which have been downloaded to it from the NSM (or entered locally via a node console). These comprise:
- regular expression style dialling patterns which represent destinations that the node recognises. An incoming call with a called number that doesn't match any of the dialling patterns cannot be routed and will be rejected.
- a 'Routing Choices' table, which details (many to many) relationships between Net Ways and destinations. Each Routing Choice indicates that it is possible to reach a given destination via a given Net Way and specifies any special transformation that must be applied to the called number.

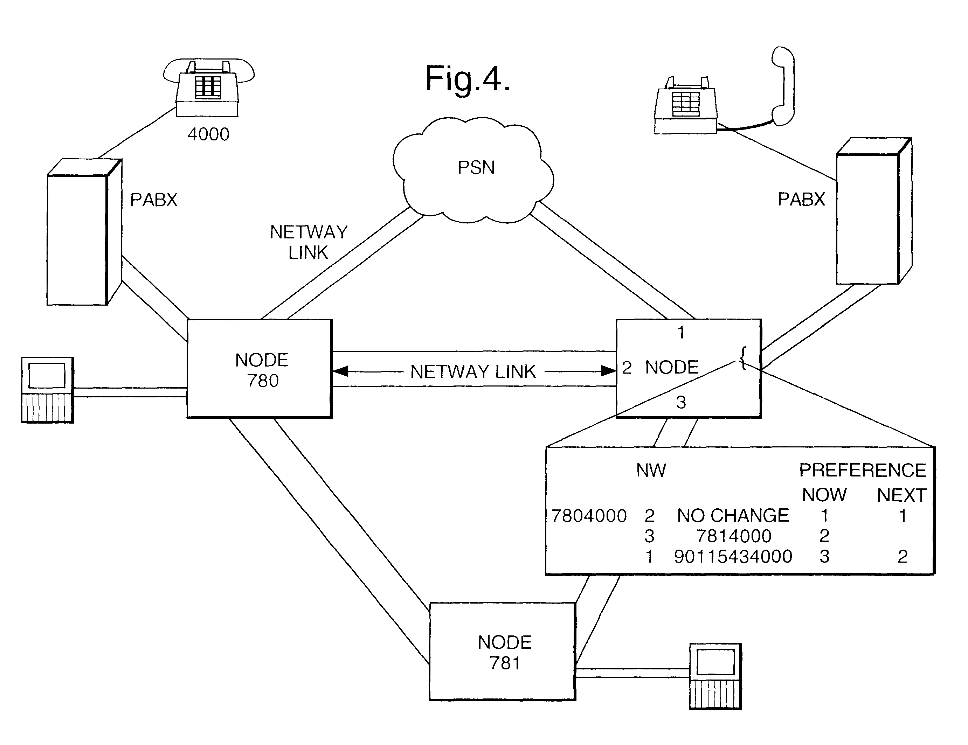

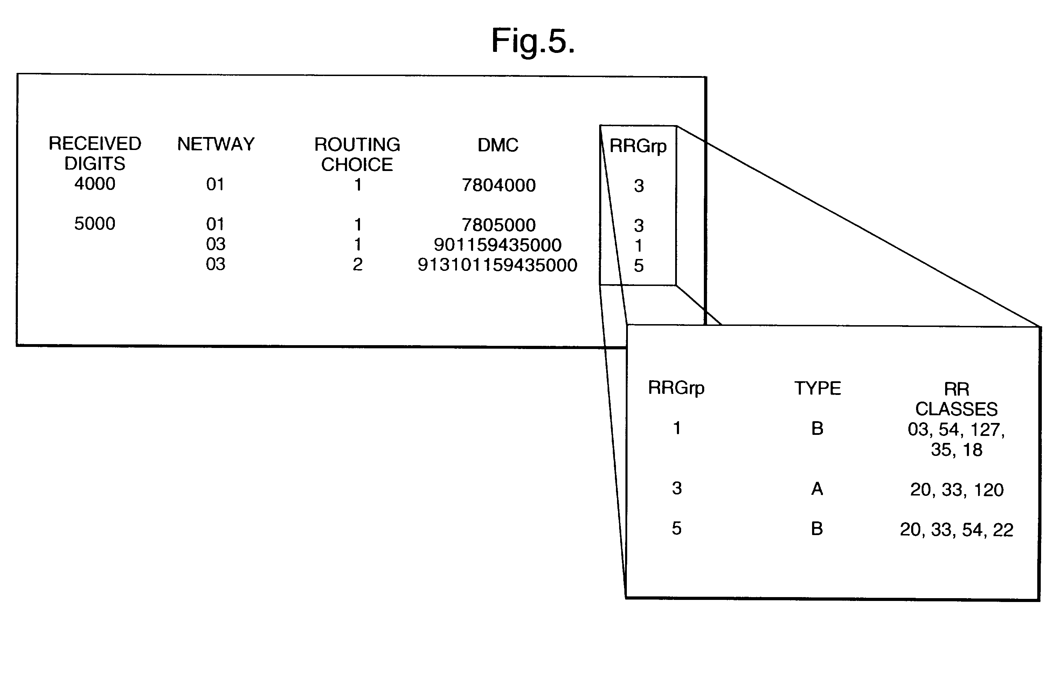

A given Net Way/destination combination can have a number of correlating Routing Choices, each one specifying a different transformation. This situation arises where source routing is used, e.g. to distinguish between multiple Public Switched Network (PSN) carriers which can all be reached via the same Net Way.
- a 'Routing Preferences' table which associates each Routing Choice with a preference rating per traffic type. Thus a particular Routing Choice might have a high preference rating for, say, "data", but a lower preference rating (perhaps even a null preference rating) for "video". (See Figure 4)
- a route restriction table consisting of 'Route Restriction Groups'. Each Route Restriction Group specifies a set of 'Route Restriction Class' (RRC) element values (as conveyed by NSS to indicate the route restriction class of the caller) that are either 'allowed' or 'barred'. (See Figure 5)
- a table indicating whether each Net Way is governed by a Route Restriction Group.
- a table indicating whether each Routing Choice is governed by a Route Restriction Group (independently of the associated Net Way).

The process of routing requires that the call has an associated traffic type. It proceeds as follows:
1. The most specific dialling pattern (destination) that matches the called number is selected.
2. All the Routing Choices associated with this destination are selected and ranked in order of their preference rating for the call's traffic type (any with null preference are not included).
3. The most preferable Routing Choice from the resulting set is selected and the following checks are applied to it;
   - the call must not be barred from using the Routing Choice according to its RRC element and any configured Route Restriction Groups.
   - if the Net Way associated with the Routing Choice is to a PSN then the call must not carry the PSN barred element.
   - the Net Way associated with the Routing Choice must not be the incoming Net Way.
   - there must be free bandwidth available on the associated Net Way and, furthermore, allocating any to the call's traffic type must not cause a bandwidth infringement on that Net Way.
      If any of these checks fail then that Routing Choice is removed from the set and the next most preferable one is checked.
4. If a suitable route is found, as much bandwidth as can be used for the call's traffic type without causing a bandwidth infringement may be used by the call.
5. The ranked set of Routing Choices is preserved in case further route attempts need to be attempted (e.g. if step back re-routing from a subsequent node occurs) by resuming at step 3. The number of re-route attempts can be restricted.

The route restriction test (using the call's RRC element) is an extension of the well known facility and comprises two stages. First, the call is checked to see whether it is permitted to use the prospective Net Way, regardless of the destination called.
Second, the call is further checked to see whether it is permitted to route to the indicated destination using the prospective Routing Choice, i.e. using a particular Net Way/called number transformation combination.

As well as relating route restriction tests to Net Ways and Routing Choices the other novel feature of node route restriction is the ability to configure Route Restriction Groups to work according to either a hierarchical or a matrix scheme. (Existing systems using one or the other.) The hierarchical scheme is the simplest and requires less configuration. Here, RRCs act as 'facility restriction levels', whereby each level represents a higher level of capability than the preceding level. The matrix scheme is more flexible. This treats RRC values independently and no one RRC value is considered to be better than any other.

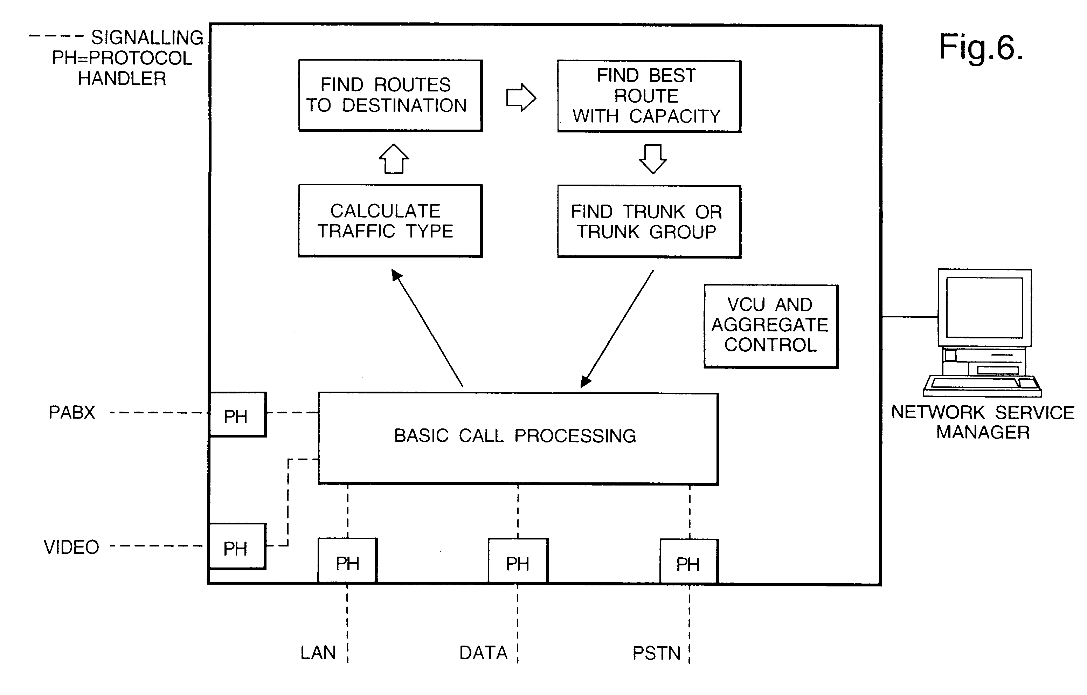

Figure 6 shows an overview of the basic call processing.

In order to fully exploit tariff differentials in PSNs the configuration data that comprises the bandwidth allocation and routing rules can be programmed to change in a scheduled manner. Scheduled changes to bandwidth limits can also be used to ensure bandwidth will be available at a set time for 'booked calls' such as video conferences.

The NSM is used to co-ordinate this programming so that the nodes switch configuration simultaneously and consistently across the network. The programming takes place in advance of the switchover time so that communication times between NSM and nodes which can vary widely across the network, are not an issue. This also permits nodes to continue working to a schedule should they become disconnected from the NSM.

In the simplest implementation of the system, the schedule that can be held by a node comprises just a 'current' and a 'next' set of data and a switchover time. At the switchover time the next set of data becomes current. After this time NSM would typically download a new next set of data and reset the switchover time. Downloading the new data can be in terms of updates to the existing data to reduce the communications overhead, and the node can be made to simply toggle the current and next sets.

In a more sophisticated implementation, nodes can hold multiple sets of configuration data and a repeating sequence of switchover times to allow for indefinite periods of operation without reconfiguration.

It is required that a Node Signalling Service (NSS) is provided to convey traffic type and other such Node specific information from node to node. NSS also provides gateway protocol conversion for interfacing to other private network equipment (such as PBXs) and public switched networks.

In an ISDN environment, numbers can be received and transmitted in a number of different formats, as identified by the Numbering Plan Identification (NPI) and Type of Number (TON) fields within various Q.391 information elements. Examples include E.164 international, E.164 national, E.164 subscriber, Private Numbering Plan local, Private Numbering Plan level 1 region, etc. In addition there is an "implicit" format where the numbering plan and type of number are implied by the actual number digits rather than by the separate NPI and TON fields.

In the case of selection numbers (as conveyed in a Q.391 Called party number information element), these various receivable forms have to be used for routeing and then translated into forms for transmission on to the next node. In the case of identification numbers (as conveyed in Q.931 Calling party number and Connected number information elements), these various receivable forms have to be translated into forms suitable for transmission to the next node. In each case, the actual forms that are receivable and the actual forms that it is permissible to transmit depend on the nature of the interface to the adjacent node, e.g. public ISDN access using Q.931 signalling, leased line using QSIG or DPNSS signalling.

This could therefore result in vast data tables catering for all possible translations and routings.

This has been rationalised by creating a 6-step translation process for selection numbers and a 4-step translation process for identification numbers. The 4-step process comprises steps 1, 2, 5 and 6 of the 6-step process. The 6 steps are:
Step 1 - Convert a received explicit number form into the implicit form (e.g. by adding "9" to the front of an E.164 number);
Step 2 - Convert a received number from the numbering arrangement of the interface concerned into a common internal numbering arrangement;
Step 3 - Optimise the number (e.g. by converting an E.164 number for the required destination into a private numbering plan equivalent);
Step 4 - Convert the destination number in accordance with the requirements of the selected route (e.g. by inserting digits to force selection of a particular carrier);
Step 5 - Convert a number for transmission from the common internal arrangement to the numbering arrangement of the interface on which it is to be transmitted;
Step 6 - Convert a number for transmission from the implicit form into an explicit form acceptable to the interface on which it is to be transmitted.

A common interface (Signalling Service, NSS) is used between the various signalling protocol handlers in the Signalling Domain and the Application Domain. This isolates from the application software the differences between different signalling protocols (e.g. Q.391, QSIG, DPNSS, DASS2).

NSS comprises various messages. The information content of each message is divided into three parts.
a) Application Part - This comprises information that is relevant to the Application Domain. Application Part information is translated to and from NSS elements by the signalling protocol handlers and can be examined, modified, inserted or deleted by the Application Domain.
b) Interworking Part - This comprises information that is not relevant to the Application Domain but is relevant for interworking between different signalling protocols. Interworking Part information is translated to and from NSS elements by the signalling protocol handlers and passes transparently between signalling protocol handlers bypassing the Application Domain. This allows interworking of the information between different signalling protocols. Only information that does not belong to the Application Part and has equivalent in at least two different signalling protocols needs to be put into this part.
c) Transit Part - This comprises information that is not relevant to the Application Domain and is not needed for interworking between different signalling protocols. It is not translated to and from specific elements but is passed between signalling protocol handlers as elements of the original protocol. This Part is suitable for any information that occurs only in one protocol and avoids the need for defining specific NSS elements for such information. Even the signalling protocol handlers do not need to understand such elements, i.e. any unrecognised elements of the signalling protocol can be passed through as Transit Part information.

## Claims

1. A method of routing calls and allocating circuits in a telecommunications system between a switching node and another switching node or between a switching node and a switching network, comprising the steps of:
a) allocating each circuit between a pair of nodes or between a node and a switching network to a specific Net Way which Net Way represents a collection of channels grouped together into a logical unit for the purpose of bandwidth management;
(b) creating a Traffic Type decode table at each node for deriving the traffic type of those incoming calls that, according to a signalling service, are not already attributed a traffic type;
(c) creating a Routing Choices table for associating each Net Way with specific destinations;
(d) creating a Routing Preferences table for associating each Routing Choice with a preference rating for each traffic type.
(e) creating a Route Restriction Groups table where each record defines a set of Route Restriction Class element values and specifies whether the set is 'allowed' or 'barred' according to that group.
(f) creating a Bandwidth Limits table where each record associates a Net Way with a particular traffic type and defines a reserved bandwidth level and a maximum bandwidth level for calls of that traffic type on that Net Way.
(g) allocating calls, with reference to their traffic type, to a Net Way determined by Routing Choice, Routing Preference, and on which a sufficient bandwidth exists.

2. A method as claimed in Claim 1, further comprising the step of allocating calls, with reference to their traffic type, to a Net Way determined by Routing Choice, Routing Preference, Route Restriction, and on which sufficient bandwidth exists.

3. A method as claimed in Claim 2, wherein the Route Restriction processing is user configurable to operate according to a hierarchical or a matrix scheme.

4. A method as claimed in Claim 2 or 3, wherein a Net Way is a compressed voice link where each channel therein is a sub-rate channel.

5. A method as claimed in Claim 4, wherein a branch of a call occupying a plurality of channels is treated as a call in its own right so that branch calls can proceed independently through the network.

6. A method as claimed in any preceding claim, wherein a network manager controls the configuration of nodes within the network.

7. A method as claimed in any preceding claim, further including provision for creating a scheduled table in the nodes for specifying when and in what way Bandwidth Limits, Routing Preferences and Route Restriction data should be changed.

8. A method as claimed in Claim 7, further including provision for creating a rolling schedule comprising multiple sets of configuration data and a repeating sequence of switchover times.

9. A method as claimed in any preceding claim, further including provision for monitoring the traffic on nodes according to traffic type.
